# EUROPÄISCHE PATENTSCHRIFT

(11) **EP 1 659 462 B1**
(45) Veröffentlichungstag und Bekanntmachung des Hinweises auf die Patenterteilung: **17.06.2009**
(21) Anmeldenummer: 04105928.8
(22) Anmeldetag: 19.11.2004
(51) Int. Cl.: G05B 19/042, G05B 19/418

(54) **Verfahren zur Inbetriebnahme einer elektrischen Anlage**
Method for starting up an electrical installation
Procédé de mise en fonction d'un installation électrique

(43) Veröffentlichungstag der Anmeldung: 24.05.2006
(73) Patentinhaber: ebm-papst Mulfingen GmbH & Co. KG, 74673 Mulfingen (DE)
(72) Erfinder: Sauer, Thomas, 65510 Idstein (DE); Betz, Thomas, 97999 Igersheim (DE); Fessel, Andreas, 74523 Schwäbisch Hall (DE)
(74) Vertreter: Patentanwälte Dr. Solf & Zapf

(56) Entgegenhaltungen:
- EP-A- 1 233 315
- EP-A- 1 265 118
- WO-A-01/52478
- DE-A1- 19 806 297
- US-A- 5 519 878

## Beschreibung

Die vorliegende Erfindung betrifft eine Funktionseinheit, bestehend aus einer Lüftungseinheit mit einer gerätespezifischen Adresse, die zusätzlich von außen als maschinenlesbare Identifikationskennzeichnung auf der Lüftungseinheit aufgebracht ist.

In der Druckschrift EP 0 743 578 B1 wird eine bidirektionale Kommunikation zwischen den jeweiligen Funktionseinheiten, d. h. Filter-Ventilator-Einheiten und der zentralen Steuereinheit auf der Basis eines LON-Netzwerkes (Local Operating Network) beschrieben. Dieses aus der Gebäude- und in der Industrieautomation bekannte und standardisierte Netzwerk ermöglicht es, durch Status- und Steuerinformationen jede Filter-Ventilator-Einheit von der zentralen Steuereinheit aus individuell entsprechend den lufttechnischen Erfordernissen eines Reinraumes zu steuern. Die zentrale Steuereinheit ist dabei in der Regel ein Personal Computer bzw. ganz allgemein eine Computersteuerung. Auf dem Bildschirm des Monitors der Steuerung ist die aus den einzelnen Filter-Ventilator-Einheiten bestehende Lüftungsanlage graphisch dargestellt. Man erhält so einen Überblick über die Anlage und kann durch die entsprechenden Steuerbefehle vom PC aus gezielt auf jeden Ventilator zugreifen und dessen Einstellungen verändern. Auch im Fehlerfall erfolgt die Anzeige einer defekten Filter-Ventilator-Einheit auf dem Bildschirm, und man kann erforderlichenfalls aufgrund der graphischen, der Örtlichkeit angepaßten Darstellung einfach und rasch gezielt auf jede fehlerhafte Filter-Ventilator-Einheit einwirken.

(EEPROM) eines Mikrocontrollers abgelegt ist. Bei der Installation und Inbetriebnahme der Anlage kann nun nicht mehr davon ausgegangen werden, dass die Ventilatoren am Einbauort in dieser der Adressnummer entsprechenden Reihenfolge montiert werden. Der Einbau erfolgt in zufälliger Reihenfolge, wobei, wie oben bereits erwähnt, ein Reinraum an seiner Decke mehrere hundert bzw. tausend Ventilatoren des gleichen Typs aufweisen kann, die z. B. in einer rechteckförmigen Matrix angeordnet sind. Um jeden Ventilator gezielt ansprechen zu können, muß aber die Zuordnung der Adress- bzw. Identifikationsnummer (Kennung) zu dessen räumlicher Position in der XY-Matrix bekannt sein. Da der Ventilator üblicherweise über eine Visualisierungs-Software, die die räumliche Anordnung der Ventilatoren auf dem Bildschirm eines PC zeigt, angesprochen wird, muß dem Symbol des Ventilators auf dem Bildschirm in der Visualisierungs-Software die Adress- bzw. Identifikationsnummer des Ventilators zugeordnet werden.

Eine gattungsgemäße Funktionseinheit ist aus der WO/01/52478 A bekannt. Hierbei werden räumlich verteilt an bestimmten Einbaupositionen angeordnete elektromechanische Funktionseinheiten über eine in elektronischer Form abgespeicherte Adresse über ein Signalübertragungsnetzwerk von einer zentralen Steuereinheit individuell gesteuert. Hierbei wird das Gehäuse jeder Funktionseinheit mit einer ersten von außen lesbaren optischen Identifikationskennung - Barcode mit Control-ID - versehen, die eindeutig der gerätespezifischen internen Adresse zugeordnet ist. Weiterhin ist eine zweite, von außen lesbare optische Zusatzkennung, Barcode, mit einer Positionskodierung vorhanden. Mittels eines optischen Lesemittels werden beide Kennzeichnungen erfasst und elektronisch abgespeichert und an die Steuereinheit zur Weiterverarbeitung übermittelt. Mit der aus dieser Druckschrift bekannten Ausgestaltung ist aber der Nachteil verbunden, dass im Falle eines Ausbaus zu Zwecken der Reparatur oder..dergleichen, insbesondere, wenn mehrere Funktionseinheiten gleichzeitig in dem System ausgebaut werden müssen, anschließend für den Wiedereinbau nicht festgestellt werden kann, an welchem Ort die jeweilige ausgebaute Funktionseinheit wieder eingesetzt werden muss, denn die jeweilige Funktionseinheit ist einem bestimmten Einbauort zugeordnet.

Aus der US-A-5519878 ist ein Verfahren oder eine Vorrichtung zur Identifizierung von Netzwerkknoten - Geräte- bzw. Funktionseinheiten - auf einem Lageplan des Netzwerkes bekannt. Hierbei ist die eine Funktionseinheit identifizierende Kennzeichnung körperlich getrennt von der Funktionseinheit auf dem separaten gedruckten Netzwerk-Lageplan vermerkt. Die Zuordnung kommt hierbei durch Aufbringen der Identifikabons-Kennzeichnung auf den gedruckten Lageplan zustande und wird anschließend durch optisches Einlesen in ein elektronisches Medium übernommen.

Der vorliegenden Ereindung liegt die Aufgabe zugrunde, eine Funktionseinheit der gattungsgemäßen Art zu entwickeln, bei der eine einfache, schnelle und auch zuverlässige Zuordnung von Identifikationsnummer zur Einbauposition gewährleistet ist.

Erfindungsgemäß wird dies dadurch erreicht, dass die Lüftungseinheit eine Filter-Ventilator-Einheit ist, deren Motorelektronik einen Mikrocontroller aufweist, in dessen Speicher die gerätespezifische Adresse eingeschrieben ist, und dass auf der Filter-Ventilator-Einheit als Zusatzkennzeichnung eine zweite maschinenlesbare Kennzeichnung angebracht ist, die die Einbauposition der Filter-Ventilator-Einheit bezeichnet, wobei die beiden Kennzeichnungen derart auf der Filter-Ventilator-Einheit angeordnet sind, dass sie im eingebauten Zustand derselben mittels eines Lesegerätes gelesen werden können.

Die nachrichtentechnische Vernetzung der Funktionseinheiten erfolgt mittels eines Signalübertragungsnetzwerks, welches insbesondere als Bussystem, als Bussystem mit serieller Datenübertragung, als Bussystem mit TCP/IP-Übertragungsprotokoll oder als LON-Netzwerk ausgelegt sein kann.

Die Anwendung der erfindungsgemäßen Funktionseinheit wird an dem Beispiel der oben beschriebenen lufttechnischen Anlage in einem Reinraum erläutert. In diesem Ausführungsbeispiel stellen die Funktionseinheiten Filter-Ventilator-Baugruppen dar, wobei die Identifikations-Kennzeichnung einer eindeutigen Abbildung der einprogrammierten (Netzwerk-)Adresse entspricht und die Zusatzkennzeichnung, gegebenenfalls über eine Abbildungsvorschrift, die Einbauposition angibt. Beide von außen lesbare Kennzeichnungen sind vorzugsweise als Barcode ausgeführt. Denkbar sind neben dieser optischen Speicher- und Übertragungstechnik auch Nachrichten-Übertragungssysteme, die auf elektromagnetischen Verfahren beruhen, z.B. neue RFID-Anwendungen. Bei der Fertigung der Filter-Ventilator-Einheiten wird jeder Einheit fortlaufend eine Adresse fest zugeteilt, was z. B. in einem Mikrocontroller mit Speicher (EEPROM) geschehen kann. Vorzugsweise ist dieser Mikrocontroller Bestandteil der Motorelektronik. Die Adresse für jede Einheit ist eindeutig festgelegt, d.h. es gibt keine Mehrfach-Adresszuweisung. Das Schreiben der Adresse in den Speicher kann z. B. in der Endprüfung des Gerätes geschehen. Diese Adresse wird zusätzlich auch mittels eines Barcode-Druckers ausgedruckt und als Identifikations-Kennzeichnung auf das Gehäuse der der Adresse zugeordneten Filter-Ventilator-Einheit an einer später leicht zugänglichen Stelle angebracht. Somit weist nach Abschluß der Ventilatorherstellung jeder Ventilator seine individuelle Adresse auf, die mittels Barcode auf jedem Ventilator dokumentiert ist. Zusätzlich kann die Adresse auch alphanumerisch aufgedruckt sein. Die Filter-Ventilator-Einheiten werden dann in beliebiger von der Adresse unabhängiger Reihenfolge an der Reinraumdecke montiert. Nach dem Einbau wird auf dem Ventilatorgehäuse als Zusatz-Kennzeichnung ein zweiter Barcode angebracht, der die Einbauposition dieser Filter-Ventilator-Einheit bezeichnet. Diese zweiten Barcodes werden vor der Inbetriebnahme der Anlage entsprechend den notwendigen Positionsangaben, beispielsweise kodiert in aufsteigender Reihenfolge, gedruckt. Auch hier ist das Aufdrucken einer zusätzlichen alphanumerischen Positionsbezeichnung, z. B. für Kontrollzwecke möglich. Nach Anbringen der Kennzeichnungen wird mit einem mobilen Barcode-Scanner an jedem Ventilator der Barcode für die Adresse und der Barcode für die Position des Ventilators paarweise eingelesen. Der Barcode-Scanner wird üblicherweise in Verbindung mit einem tragbaren PC betrieben, der die Daten entsprechend aufbereitet und abspeichert. Es entsteht eine Zuordnungstabelle, die in elektronischer Form in das Visualisierungssystem übertragen wird. Auf diese Weise erfolgt eine eindeutige Zuweisung von Adresse und Position im Visualisierungssystem.

Somit wird also neben der einfachen und schnellen Zuordnung von Adresse und Position auch eine fehlerfreie Zuordnung ermöglicht, da die Zuordnungstabelle ohne potentiell fehlerbehaftete manuelle Eingabe von Daten erzeugt wird. Das Visualisierungssystem erlaubt zudem eine schnelle Kontrolle der Vollständigkeit der Zuordnungen.

Zur weiteren Verdeutlichung der Erfindung sei auf die Zeichnungen zu dem zuvor beschriebenen Ausführungsbeispiel hingewiesen. Dabei zeigen:
- Fig. 1: ein funktionales Blockschaltbild der Signalübertragung zwischen den Filter-Ventilator-Einheiten und der zentralen Steuereinheit über ein Bussystem,
- Fig.2: ein Ausführungsbeispiel der visualisierten Zuordnungstabelle mit numerischer Kodierung der Einbaupositon.

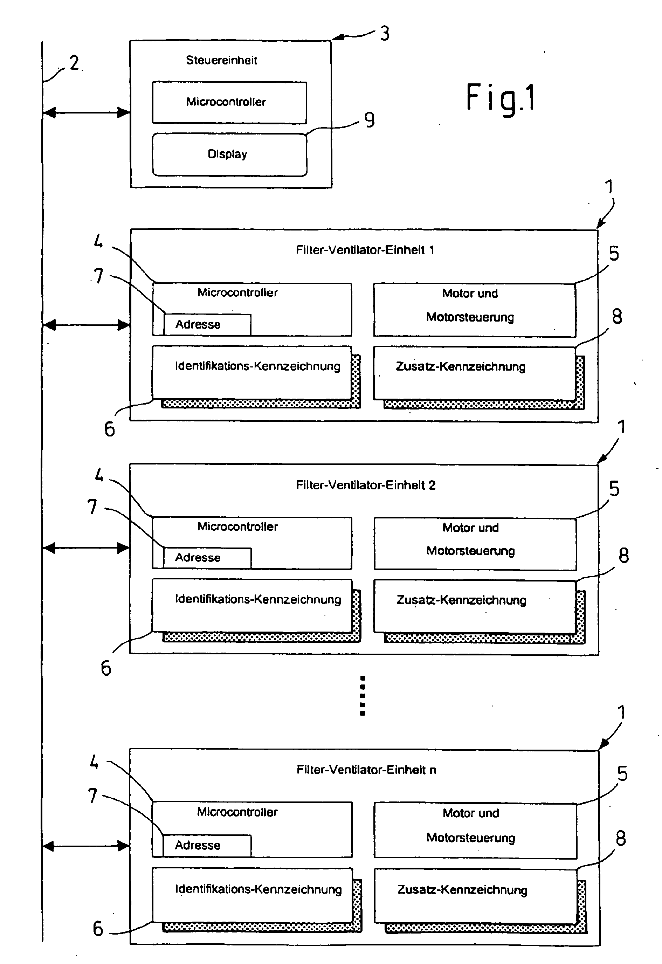

Die in dem Blockschaltbild in Fig. 1 dargestellte signaltechnische Vernetzung erlaubt jede Filter-Ventilator-Einheit 1 über das Bussystem 2 individuell mit ihrer (Netzwerk)-Adresse 7 von der zentralen Steuereinheit 3 anzusprechen. Die Adresse 7 ist zuvor während des Produktionsprozesses der Filter-Ventilator-Einheit 1 fest in dem Speicher des Mikrocontrollers 4 der jeweiligen Filter-Ventilator-Einheit 1 abgelegt worden, und wird bei Aussendung auf dem Bussystem 2 von dem Mikrocontoller 4 der angesprochen Filter-Ventilator-Einheit 1 erkannt, so dass nachfolgende Steuersignale von dieser angesprochenen Filter-Ventilator-Einheit 1 interpretiert werden und auf den Motor bzw. die Motorsteuerung 5 einwirken können.

Auf dem Gehäuse der Filter-Ventilator-Einheit 1 ist die im Speicher des Mikrocontrollers 4 abgelegte Adresse 7 zusätzlich als maschinenlesbare Identifikations-Kennzeichnung 6 (z. B. Barcode-Aufkleber) angebracht. Außerdem ist die Einbauposition der Filter-Ventilator-Einheit 1 als maschinenlesbare Zusatz-Kennzeichnung 8 (z. B. Barcode-Aufkleber) in der Weise angebracht, so dass beide Kennzeichnungen 6, 8 durch Heranziehung eines geeigneten separaten Lesegerätes (z. B. Barcode-Leser) zur weiteren Verarbeitung in die Steuereinheit 3 von außen paarweise und gespeichert eingelesen und dort auf einem Display 9 zur Anzeige gebracht werden können.

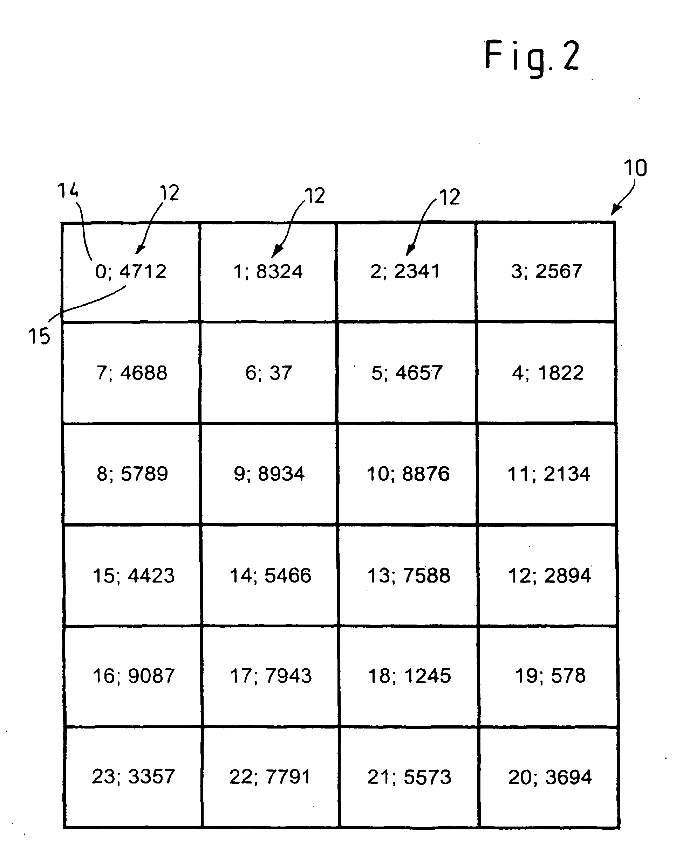

Fig. 2 zeigt die Zuordnungstabelle 10, die erfindungsgemäß nach paarweisem Einlesen und Abspeichern der Identifikations-Kennzeichnung 6 und der Zusatz-Kennzeichnungen 8 graphisch auf einem Display 9 darstellbar ist. Die matrixförmige Anordnung der Kennzeichnungs-Paare 12 spiegelt die räumliche Anordnung der Filter-Ventilator-Einheiten 1 an der Decke eines Reinraums wieder, wobei die erste Ziffer 14 eine numerisch kodierte Darstellung der Position der Filter-Ventilator-Einheit und die zweite Ziffer 15 die Adresse 7 der Filter-Ventilator-Einheit 1 repräsentieren.

## Patentansprüche

1. Funktionseinheit, bestehend aus einer Lüftungseinheit (1) mit einer gerätespezifischen Adresse (7), die zusätzlich von außen als maschinenlesbare Identifikationskennzeichnung (6) auf der Lüftungseinheit (1) aufgebracht ist,
**dadurch gekennzeichnet, dass** die Lüftungseinheit (1) eine Filter-Ventilator-Einheit ist, deren Motorelektronik einen Mikrocontroller aufweist, in dessen Speicher die gerätespezifische Adresse (7) eingeschrieben ist, und das auf der Filter-Ventilator-Einheit (1) als Zusatzkennzeichnung (8) eine zweite maschinenlesbare Kennzeichnung angebracht ist, die die Einbauposition der Filter-Ventilator-Einheit (1) bezeichnet, wobei die beiden Kennzeichnungen (6, 8) derart auf der Filter-Ventilator-Einheit (1) angeordnet sind, dass sie im eingebauten Zustand derselben mittels eines Lesegerätes gelesen werden können.

2. Funktionseinheit nach Anspruch 1,
**dadurch gekennzeichnet, dass** die maschinenlesbaren Kennzeichnungen (6, 8) als Barcode ausgebildet sind.

3. Funktionseinheit nach Anspruch 1 oder 2,
**dadurch gekennzeichnet, dass** die Filter-Ventilator-Einheit (1) an eine Steuereinheit (3) über ein Bussystem (2), insbesondere ein Bussystem mit serieller Datenübertragung angeschlossen ist.

4. Funktionseinheit nach Anspruch 1 oder 2,
**dadurch gekennzeichnet, dass** die Filter-Ventilator-Einheit (1) über ein Bussystem mit TCP/IP-Übertragungsprotokoll mit der Steuereinheit (3) verbunden ist.

## Claims

1. A functional unit, consisting of a ventilation unit (1) with a device-specific address (7), which is additionally applied externally to the ventilation unit (1) as a machine-readable identifying designation means (6),
**characterised in that** the ventilation unit (1) is a filter/ventilator unit, the motor electronics of which have a microcontroller, into the memory of which the device-specific address (7) is entered, and **in that** a second machine-readable designation means is applied to the filter/ventilator unit (1) as an additional designation means (8), which designates the installed position of the filter/ventilator unit (1), the two designation means (6, 8) being arranged on the filter/ventilator unit (1) such that they can be read by means of a reading device in the installed state thereof.

2. A functional unit according to Claim 1, **characterised in that** the machine-readable designation means (6, 8) are in the form of a barcode.

3. A functional unit according to Claim 1 or 2, **characterised in that** the filter/ventilator unit (1) is connected to a control unit (3) via a bus system (2), in particular a bus system with serial data transmission.

4. A functional unit according to Claim 1 or 2, **characterised in that** the filter/ventilator unit (1) is connected to the control unit (3) via a bus system with TCP/IP transmission protocol.

## Revendications

1. Ensemble fonctionnel, composé d'une unité d'aération (1) ayant une adresse (7) spécifique à l'appareil qui est appliquée en plus depuis l'extérieur sur l'unité d'aération (1) comme un marquage d'identification (6) lisible par une machine, **caractérisé en ce que** l'unité d'aération (1) est un ensemble filtre/ventilateur dont le système électronique du moteur présente un microcontrôleur dans la mémoire duquel est inscrite l'adresse (7) spécifique à l'appareil, et **en ce qu'**un deuxième marquage lisible par une machine est appliqué sur l'ensemble filtre/ventilateur (1), en tant que marquage supplémentaire (8), ce deuxième marquage désignant la position de montage de l'ensemble filtre/ventilateur (1), les deux marquages (6, 8) étant disposés sur l'ensemble filtre/ventilateur (1) de telle sorte qu'à l'état installé de celui-ci, ils peuvent être lus au moyen d'un lecteur.

2. Ensemble fonctionnel selon la revendication 1, **caractérisé en ce que** les marquages (6, 8) lisibles par une machine sont réalisés comme des codes à barres.

3. Ensemble fonctionnel selon la revendication 1 ou 2, **caractérisé en ce que** l'ensemble filtre/ventilateur (1) est connecté à une unité de commande (3) par l'intermédiaire d'un système de bus (2), en particulier d'un système de bus à transmission de données série.

4. Ensemble fonctionnel selon la revendication 1 ou 2, **caractérisé en ce que** l'ensemble filtre/ventilateur (1) est relié à l'unité de commande (3) par l'intermédiaire d'un système de bus à protocole de transfert TCP/IP.
